# EUROPEAN PATENT APPLICATION

(11) **EP 3 352 102 A1**
(43) Date of publication of application: **25.07.2018**
(21) Application number: 18151647.7
(22) Date of filing: 15.01.2018
(51) Int. Cl.: G06F 17/30

(54) **DATA IMPORT SYSTEM**

(30) Priority: 18.01.2017 US 201762447614 P; 10.07.2017 US 201715645602
(71) Applicant: Palantir Technologies Inc., Palo Alto, CA 94301 (US)
(72) Inventor: SCHINDEL, Howard, Palo Alto, CA California 94301 (US); XIAO, David, Palo Alto, CA California 94301 (US); KIM, Hanna, Palo Alto, CA California 94301 (US); OSSCHER, Joel, Palo Alto, CA California 94301 (US); WILSON, Timothy, Palo Alto, CA California 94301 (US)
(74) Representative: Derry, Paul Stefan

(57) **Abstract**

Example embodiments described herein pertain to a synchronization system, configured to function as an intermediary between data import systems, in order to prevent duplicate and corrupted data objects from being imported into a destination system. The system comprising processor, memory and instructions that, when executed, cause the machine to perform operations comprising: accessing a database that includes legacy identifiers and destination identifiers assigned to data objects, the legacy identifiers being received from a data source, the destination identifiers being assigned to the data objects at a destination system; extracting the legacy identifiers and the destination identifiers; generating a data table based on the legacy identifiers and the destination identifiers; loading the data table to a data import system, the data import system residing between the data source and the destination system; receiving a request to import data from the database to the destination system; ingesting a data object at the data import system in response to the request; differencing the data object with a previous version of the data object to identify a change to the data object, the previous version of the data object located at the destination system; and storing the change to the data object at the destination system.

## Description

### TECHNICAL FIELD

The subject matter disclosed herein generally relates to database management systems. Specifically, the present disclosure addresses machines and methods to facilitate the integration of raw data.

### BACKGROUND

Data integration is the process of combining data residing in different sources in order to provide a user with a unified view of the data. Data integration systems facilitate the flow of data from a data source to a destination system. A data integration system typically includes data integration components to enable the transmission and/or transformation of data to one or more destination systems.

Thus, a legacy data import systems for integrating data into a destination system may comprise a set of data integration components configured to perform a specific set of data integration operations to ingest large volumes of data into the destination system. As improved data import systems are developed and rolled out, issues may arise whereby the operations performed by the improved data import systems are not compatible with the legacy data import systems.

### BRIEF DESCRIPTION OF THE DRAWINGS

Some embodiments are illustrated by way of example and not limitation in the figures of the accompanying drawings.
FIG. 1 is a network diagram illustrating a network environment suitable for operating a synchronization system, according to some example embodiments.
FIG. 2 is a block diagram illustrating components of a synchronization system suitable to function as an intermediary between a legacy data import system and an improved data import system, according to an example embodiment.
FIG. 3 is an interaction diagram illustrating various example interactions between the synchronization system, a data source, data import systems, and databases, according to an example embodiment.
FIG. 4 is a flowchart illustrating operations of the synchronization system in generating a data table to generate a data table useable by a data import system, according to an example embodiment.
FIG. 5 is a flowchart illustrating further operations of the synchronization system in performing a method to facilitate the importing of data into a destination system, according to an example embodiment.
FIG. 6 is a flowchart illustrating further operations of the synchronization system in performing a method of generating a data table, according to an example embodiment.
FIG. 7 is a block diagram illustrating components of a machine, according to some example embodiments, able to read instructions from a machine-readable medium and perform any one or more of the methodologies discussed herein.

### DETAILED DESCRIPTION

Example embodiments described herein pertain to a synchronization system, configured to function as an intermediary between data import systems, in order to prevent duplicate or corrupted data objects from being imported into a destination system. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

The synchronization system is configured (e.g., by one or more suitable modules that include one or more processors) to receive data import requests from a first data import system (e.g., an improved data import system). Each data import request may specify a data source and a destination system. In response to receiving the data import request, the synchronization system generates a data table that includes properties of data objects previously ingested by a second data import system (e.g., a legacy data import system) into the destination system, wherein the properties may include identifiers of the data objects, media data, links, tags, and access controls. For example, the synchronization system accesses a database that includes a set of legacy identifiers assigned to a set of data objects imported from the data source by the legacy data import system, and a set of destination identifiers associated with the data objects by the destination system. The synchronization system may generate a mapping of legacy identifiers to destination identifiers, and create a data table based on the mapping. To generate the data table, the synchronization system may extract the legacy identifiers and the destination identifiers from the database and convert the identifiers to file formats including but not limited to Comma Separated Value (CSV) file or data streams, such as a JSON stream. The synchronization system may determine a mapping based on the extraction, and generate a data table based on the mapping and the extraction.

In some example embodiments, the database includes properties associated with the data objects. For example, the properties may include access criteria and controls (e.g., to access the data object), media data, links, and tags, and the request may include one or more legacy identifiers of data objects. The synchronization system may receive a request to import the properties of the data objects into the destination system. In response to receiving the request, the synchronization system may access the legacy data import system to retrieve the linked properties, import the properties to the destination system, and link the properties to the destination identifiers at the destination system. To generate the mapping, the synchronization system generates references (e.g., object pointers) for each data object identified within the database. Each object pointer includes location information (e.g., the address) of a data object fragment from among the set of data object identified by the destination identifiers and the legacy identifiers within the database. The synchronization system may generate the mapping based on the object pointers.

In some example embodiments, the synchronization system transmits the data table to the first data import system (e.g., the improved data import system). The improved data import system may then load the data table in order to compare the data object received from the data source and determine whether or not the data objects had previously been imported by the second data import system (e.g., the legacy data import system). For example, by comparing the data object from the data source to the data table, the synchronization system may determine that the data object (i.e., an identifier of the data object) is absent from the data table. If an identifier of the data object is absent from the table, then it is likely that the data object was not previously imported. As data objects are received by the first data import system from the data source, the first data import system may compare the data objects to the table in order to identify a relevant identifier of the data object. For example, upon identifying an identifier of the data object within the table, the first data import system may query the destination system to retrieve any previously imported versions of the data object (e.g., versions created by legacy data import systems), based on the mapping in the data table. The first data import system retrieves the previously imported version in order to identify a difference between the data object and the previous version of the data object. Upon identifying any changes to the data object, the first data import system may store only the changes to the data object within the destination system. In this way, the synchronization system prevents the duplication of files within the destination system.

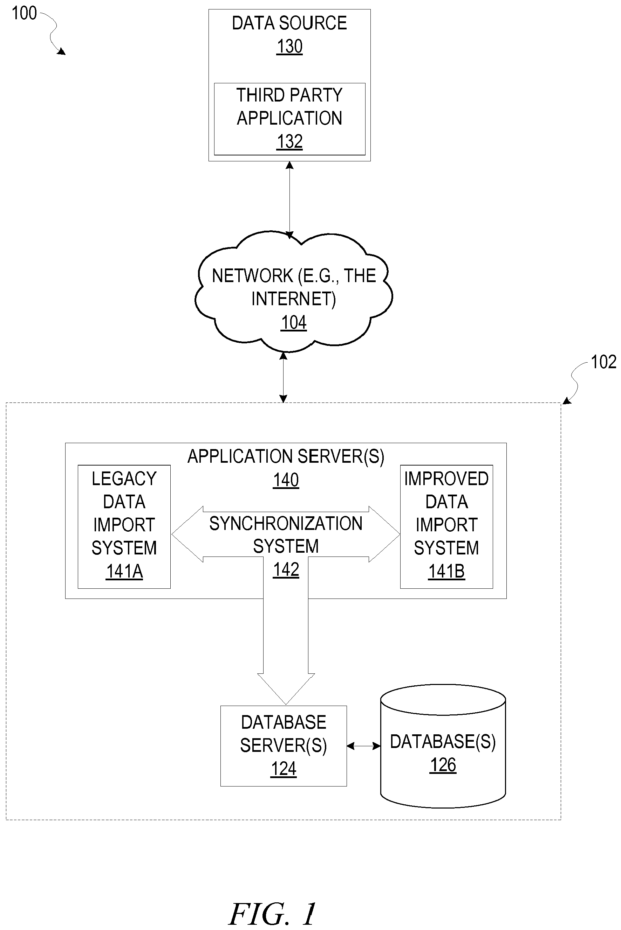

FIG. 1 is a network diagram illustrating a network environment 100 suitable for operating a synchronization system (e.g., the synchronization system 142), according to some example embodiments. A networked system 102, in the example form of a network-based publication system, provides server-side functionality, via a network 104 (e.g., an Intranet, the Internet or a Wide Area Network (WAN)), to one or more clients.

The application servers 140 may host a legacy data import system 141A, an improved data import system 141B, as well as the synchronization system 142. The application servers 140 are, in turn, shown to be coupled to one or more database servers 124 that facilitate access to one or more databases 126.

The synchronization system 142 provides functionality to receive data import requests from a data import system (e.g., legacy data import system 141A, improved data import system 141B), and in response to receiving the request, accessing a database that includes object identifiers to determine correlations and generate a data table to facilitate the import of data objects from a data source (e.g., data source 130). For example, the synchronization system 142 may be configured to access the database 126 to retrieve a set of destination identifiers to determine correlations between the destination identifiers and a set of legacy identifiers generated by the legacy data import system 141A. Based on the correlations, the synchronization system 142 generates a data table to transmit to the improved data import system 141B. While the synchronization system 142 is shown in FIG. 1 to form part of the networked system 102, it will be appreciated that, in alternative embodiments, the synchronization system 142 may form part of a data pipeline that is separate and distinct from the networked system 102.

FIG. 1 also illustrates a third-party application 132, executing on a data source 130, as having programmatic access to the networked system 102. For example, the third-party application 132 may, using information retrieved from the networked system 102, support one or more features or functions on a website hosted by a third party. The data source 130 may, for example, be a source of the raw data to be integrated into the data processing system.

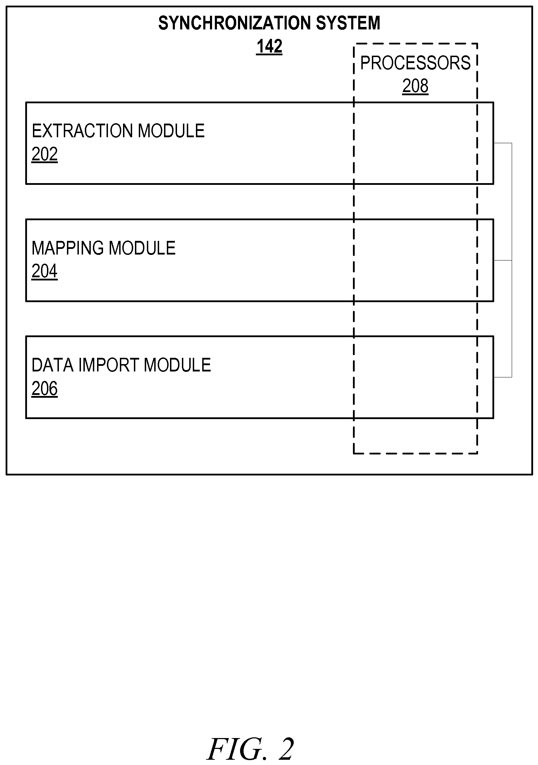

FIG. 2 is a block diagram illustrating components of the synchronization system 142 that enable the synchronization system 142 to: receive a data import request; access the database 126 to extract destination identifiers and legacy identifiers of a set of data objects imported by a legacy data import system 141A; determine correlations between the legacy identifiers and the destination identifiers; generate a data table that includes a mapping of the corresponding destination identifiers and legacy identifiers; and transmit the data table to an improved data import system 141B, according to some example embodiments. The synchronization system 142 is shown as including an extraction module 202, a mapping module 204, and a data import module 206, all configured to communicate with each other (e.g., via a bus, shared memory, or a switch). Any one or more of these modules may be implemented using one or more processors 208 and hence may include one or more of the processors 208 (e.g., by configuring such one or more processors 208 to perform functions described for that module).

Any one or more of the modules described may be implemented using hardware alone (e.g., one or more of the processors 208 of a machine) or a combination of hardware and software. For example, any module described of the synchronization system 142 may physically include an arrangement of one or more of the processors 208 (e.g., a subset of or among the one or more processors of the machine) configured to perform the operations described herein for that module. As another example, any module of the synchronization system 142 may include software, hardware, or both, that configure an arrangement of one or more processors 208 (e.g., among the one or more processors of the machine) to perform the operations described herein for that module. Accordingly, different modules of the synchronization system 142 may include and configure different arrangements of such processors 208 or a single arrangement of such processors 208 as different points in time. Moreover, any two or more modules of the synchronization system 142 may be combined into a single module, and the functions described herein for a single module may be subdivided among multiple modules. Furthermore, according to various example embodiments, modules described herein as being implemented within a single machine or device or device may be distributed across multiple machines or devices.

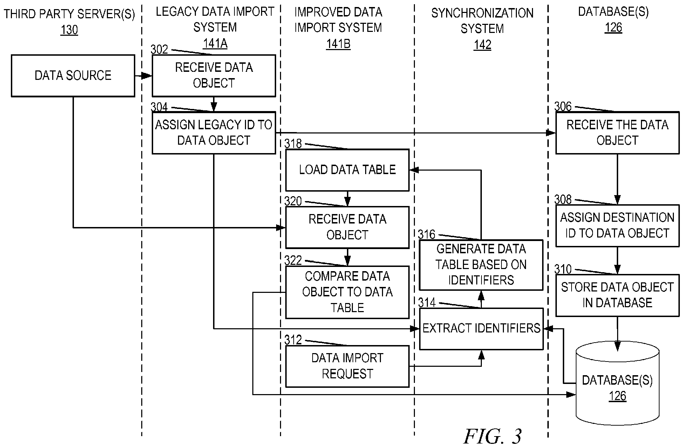

FIG. 3 is an interaction diagram depicting example exchanges between the synchronization system 142, data source 130, a legacy data import system 141A, an improved data import system 141B, and databases 126, consistent with some example embodiments. At operation 302, data (e.g., a data object) from the data source 130 is ingested by the legacy data import system 141A. Upon obtaining the data object, at operation 304, the legacy data import system 141A assigns a legacy identifier to the data object.

At operation 306, the destination system (e.g., databases 126) receives the data object, and at operation 308 assigns a destination identifier to it. At operation 310 the destination system stores the data object based on the destination identifier and the legacy identifier.

At operation 312, the improved data import system 141B transmits a data import request to the synchronization system 142. In some example embodiments, having received the data import request, the synchronization system 142 queries the destination system (e.g., databases 126) and the legacy data import system 141A, to extract, at operation 314, destination identifiers and legacy identifiers associated with data objects previously ingested by the destination system (i.e., by the legacy data import system 141A at an earlier time). Upon extracting the legacy identifiers and the destination identifiers, the synchronization system may determine correlations between the identifiers, and at operation 316, to generate a data table.

Upon generating a data table based on the correlations, at operation 318, the synchronization system 142 delivers the data table to the improved data import system 141B. The improved data import system 141B loads the data table to a memory. At operation 320, the improved data import system 141B queries the data source (e.g., the data source 130) to receive at least a data object. Upon receiving the data object, in order to determine whether or not a previous version of the data object has already been loaded into the destination system (e.g., databases 126), the improved data import system 141B compares the data object to the data table. Upon determining that the data object is different from the previous version of the data object, the improved data import system 141B differences the data object with the previous version of the data object, and stores the difference within the database 126.

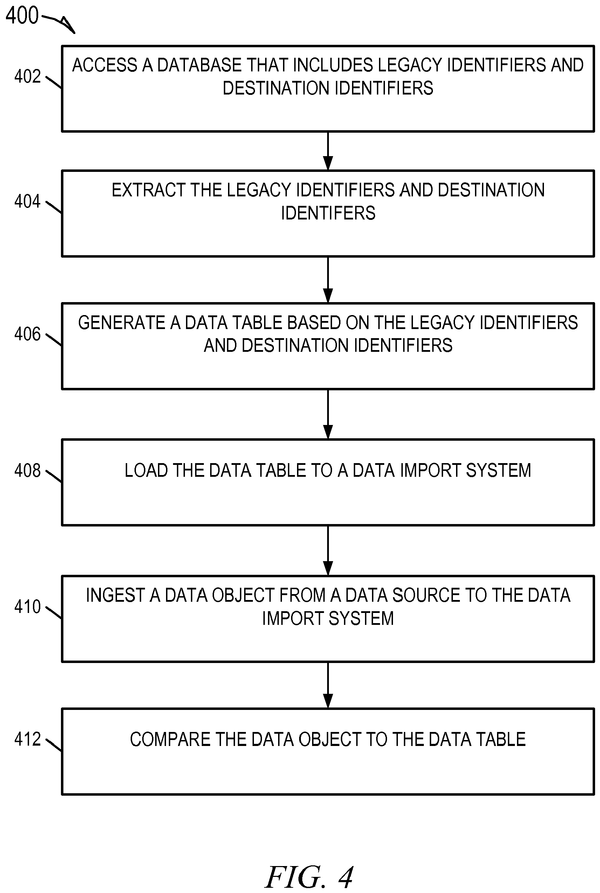

FIG. 4 is a flowchart illustrating operations of the synchronization system 142 in performing a method 400 for generating a data table useable by a data import system (e.g., an improved data import system 141B) for determining whether a data object was previously imported to a destination system (e.g., databases 126) by another data import system (e.g., legacy data import system 141A), according to some example embodiments. Operations of the method 400 may be performed by the modules described above with respect to FIG. 2.

At operation 402, the extraction module 202 accesses a database that includes a set of data object identifiers. The data object identifiers may include legacy identifiers assigned to data objects by a data import system (e.g., the legacy data import system 141A) during a data import phase, and destination identifiers assigned to the data objects by a destination system (e.g., the databases 126) upon receiving the data objects from the legacy data import system 141A.

In some example embodiments, the extraction module 202 of the synchronization system 142 may query the database 126 in response to receiving a data import request from an improved data import system 141B. In advance of commencing a data import phase from a data source to a destination system, the synchronization system 142 may intercept data import requests from the improved data import system 141B, in order to determine what data objects have already been imported by the legacy data import system 141A.

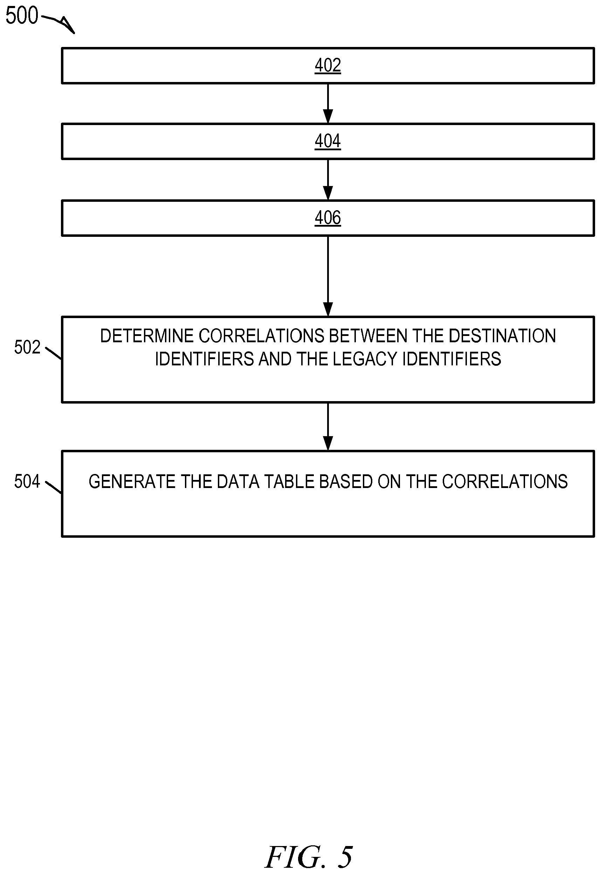

At operation 404, the extraction module 202 extracts the legacy identifiers and the destination identifiers from the database. At operation 406, the extraction module 202 transmits the destination identifiers and the legacy identifiers to the mapping module 204. The mapping module 204 may, in turn, generate a data table based on the extracted identifiers. For example, the mapping module 204 may convert the legacy identifiers and the destination identifiers into a set of CSV useable by the mapping module 204 to generate a data table. FIG. 5 is a flowchart illustrating operations of the synchronization system 142 in performing operation 406 of FIG. 4 that may include the method 500, according to some example embodiments.

At operation 408, the data import module 206 loads the data table generated by the mapping module 204 at a data import system (e.g., the data import system that initiated the data import request such as improved data import system 141B). The improved data import system 141B may utilize the data table to determine what data objects had already been imported by the legacy data import system 141A, in order to prevent duplicates within the destination system.

At operation 410, the data import module 206 passes a data object from the data source (e.g., data source 130) to the improved data import system 141B. At operation 412, the improved data import system 141B compares the data object to the data table generated by the mapping module 204 in order to determine whether the data object was previously imported to the destination system by the legacy import system 141A, and if so, whether or not the data object has changed in any way.

As seen in FIG. 5, at operation 502, the mapping module 204 determines correlations between the destination identifiers and the legacy identifiers. For example, the mapping module 204 may receive the set of CSV generated by the data import module 206, and based on the CSV values determine corresponding pairs of destination identifiers and legacy identifiers (e.g., correlations). Upon determining the correlations, at operation 504, the mapping module 204 generates the data table.

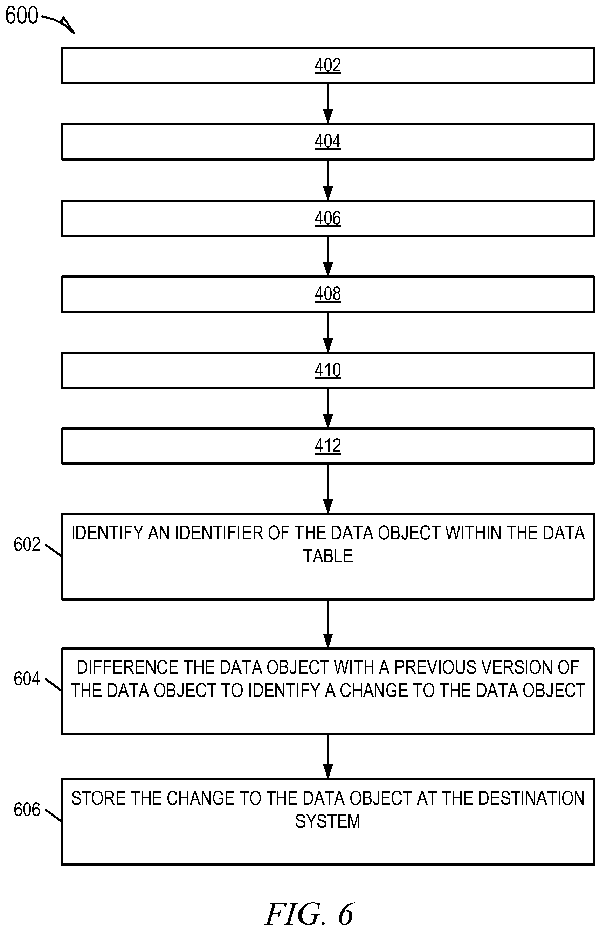

FIG. 6 is a flowchart illustrating operations of the synchronization system 142 in performing a method 600 for importing data objects into a destination system (e.g., databases 126) by a data import system (e.g., improved data import system 141B), based on a comparison of the data objects with a data table generated by the mapping module 204 of the synchronization system 142, according to some example embodiments. Operations of the method 600 may be performed as a part of the method 400 of FIG. 4, by the modules described above with respect to FIG. 2.

At operation 602, the improved data import system 141B identifies an identifier of a data object from among a set of data objects flowing from the data source (e.g., data source 130) within the data table generated by the mapping module 204. For example, the legacy data import system 141A may have previously imported a data object from the data source and assigned a legacy identifier to the data object.

At operation 604, the data import module 206 accesses the destination system (e.g., databases 126) to retrieve a previous version of the data object based on the correlations in the data table. Upon retrieving the previous version of the data object, the improved data import system 141B differences the data object with the previous version of the data object in order to identify a change to the data object.

At operation 606, having identified the change to the data object, the improved data import system 141B stores the change identified based on the differencing within the destination system, at a memory location of the destination system based on the corresponding destination identifier in the data table. In this way, the data table generated by the synchronization system 142 prevents duplicative data objects from being imported to the destination system by a data import system (e.g., improved data import system 141B).

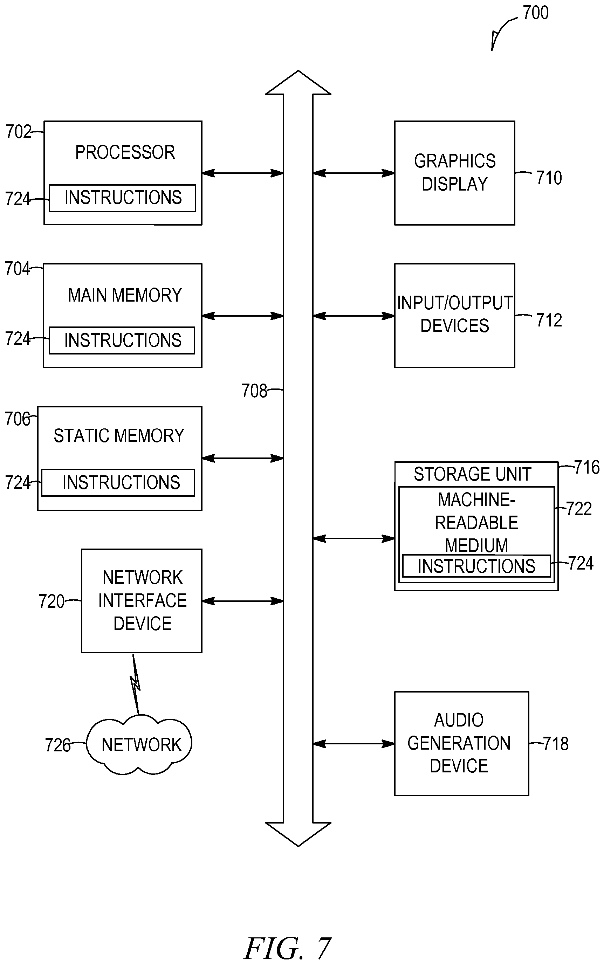

FIG. 7 is a block diagram illustrating components of a machine 700, according to some example embodiments, able to read instructions 724 from a machine-readable medium 722 (e.g., a non-transitory machine-readable medium, a machine-readable storage medium, a computer-readable storage medium, or any suitable combination thereof) and perform any one or more of the methodologies discussed herein, in whole or in part. Specifically, FIG. 7 shows the machine 700 in the example form of a computer system (e.g., a computer) within which the instructions 724 (e.g., software, a program, an application, an applet, an app, or other executable code) for causing the machine 700 to perform any one or more of the methodologies discussed herein may be executed, in whole or in part.

In alternative embodiments, the machine 700 operates as a standalone device or may be communicatively coupled (e.g., networked) to other machines. In a networked deployment, the machine 700 may operate in the capacity of a server machine or a client machine in a server-client network environment, or as a peer machine in a distributed (e.g., peer-to-peer) network environment. The machine 700 may be a server computer, a client computer, a PC, a tablet computer, a laptop computer, a netbook, a cellular telephone, a smartphone, a set-top box (STB), a personal digital assistant (PDA), a web appliance, a network router, a network switch, a network bridge, or any machine capable of executing the instructions 724, sequentially or otherwise, that specify actions to be taken by that machine. Further, while only a single machine is illustrated, the term "machine" shall also be taken to include any collection of machines that individually or jointly execute the instructions 724 to perform all or part of any one or more of the methodologies discussed herein.

The machine 700 includes a processor 702 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 704, and a static memory 706, which are configured to communicate with each other via a bus 708. The processor 702 may contain solid-state digital microcircuits (e.g., electronic, optical, or both) that are configurable, temporarily or permanently, by some or all of the instructions 724 such that the processor 702 is configurable to perform any one or more of the methodologies described herein, in whole or in part. For example, a set of one or more microcircuits of the processor 702 may be configurable to execute one or more modules (e.g., software modules) described herein. In some example embodiments, the processor 702 is a multicore CPU (e.g., a dual-core CPU, a quad-core CPU, or a 128-core CPU) within which each of multiple cores is a separate processor that is able to perform any one or more of the methodologies discussed herein, in whole or in part. Although the beneficial effects described herein may be provided by the machine 700 with at least the processor 702, these same effects may be provided by a different kind of machine that contains no processors (e.g., a purely mechanical system, a purely hydraulic system, or a hybrid mechanical-hydraulic system), if such a processor-less machine is configured to perform one or more of the methodologies described herein.

The machine 700 may further include a graphics display 710 (e.g., a plasma display panel (PDP), a light emitting diode (LED) display, a liquid crystal display (LCD), a projector, a cathode ray tube (CRT), or any other display capable of displaying graphics or video). The machine 700 may also include an input/output device 712 (e.g., a keyboard or keypad, a mouse, or a trackpad), a storage unit 716, an audio generation device 718 (e.g., a sound card, an amplifier, a speaker, a headphone jack, or any suitable combination thereof), and a network interface device 720.

The storage unit 716 includes the machine-readable medium 722 (e.g., a tangible and non-transitory machine-readable storage medium) on which are stored the instructions 724 embodying any one or more of the methodologies or functions described herein. The instructions 724 may also reside, completely or at least partially, within the main memory 704, within the processor 702 (e.g., within the processor's cache memory), within the static memory 706, or all three, before or during execution thereof by the machine 700. Accordingly, the main memory 704 and the processor 702 may be considered machine-readable media (e.g., tangible and non-transitory machine-readable media). The instructions 724 may be transmitted or received over a network 726 via the network interface device 720. For example, the network interface device 720 may communicate the instructions 724 using any one or more transfer protocols (e.g., hypertext transfer protocol (HTTP)).

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 722 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing the instructions 724 for execution by the machine 700, such that the instructions 724, when executed by one or more processors of the machine 700 (e.g., processor 702), cause the machine 700 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible and non-transitory data repositories (e.g., data volumes) in the example form of a solid-state memory chip, an optical disc, a magnetic disc, or any suitable combination thereof. A "non-transitory" machine-readable medium, as used herein, specifically does not include propagating signals per se. In some example embodiments, the instructions 724 for execution by the machine 700 may be communicated by a carrier medium. Examples of such a carrier medium include a storage medium (e.g., a non-transitory machine-readable storage medium, such as a solid-state memory, being physically moved from one place to another place) and a transient medium (e.g., a propagating signal that communicates the instructions 724).

Certain embodiments are described herein as including logic or a number of components, modules, or mechanisms. Modules may constitute software modules (e.g., code stored or otherwise embodied on a machine-readable medium or in a transmission medium), hardware modules, or any suitable combination thereof. A "hardware module" is a tangible (e.g., non-transitory) unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a CPU or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, and such a tangible entity may be physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a CPU configured by software to become a special-purpose processor, the CPU may be configured as respectively different special-purpose processors (e.g., each included in a different hardware module) at different times. Software (e.g., a software module) may accordingly configure one or more processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. Accordingly, the operations described herein may be at least partially processor-implemented, since a processor is an example of hardware. For example, at least some operations of any method may be performed by one or more processor-implemented modules. As used herein, "processor-implemented module" refers to a hardware module in which the hardware includes one or more processors. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

The performance of certain operations may be distributed among the one or more processors, whether residing only within a single machine or deployed across a number of machines. In some example embodiments, the one or more processors or hardware modules (e.g., processor-implemented modules) may be located in a single geographic location (e.g., within a home environment, an office environment, or a server farm). In other example embodiments, the one or more processors or hardware modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

## Claims

1. A computer implemented method, performed using one or more processors, comprising:
accessing a database that includes legacy identifiers and destination identifiers assigned to data objects, the legacy identifiers being received from a data source, the destination identifiers being assigned to the data objects at a destination system;
extracting the legacy identifiers and the destination identifiers;
generating a data table based on the legacy identifiers and the destination identifiers;
loading the data table to a data import system, the data import system residing between the data source and the destination system;
receiving a request to import data from the database to the destination system;
ingesting a data object at the data import system in response to the request;
differencing the data object with a previous version of the data object to identify a change to the data object, the previous version of the data object located at the destination system; and
storing the change to the data object at the destination system.

2. The computer implemented method of claim 1, wherein the database further includes properties linked to the data object based on the legacy identifier, the properties accessible by a legacy import system based on the legacy identifier, and the method further comprises:
receiving a request to import the properties to the destination system;
accessing the legacy import system based on the request;
retrieving the properties based on the legacy identifier;
importing the properties to the destination system; and
linking the properties to the destination identifier at the destination system.

3. The computer implemented method of either preceding claim, wherein the differencing the data object includes:
comparing the data object to the data table;
identifying an identifier of the data object within the data table; and
accessing the destination system to retrieve a previous version of the data object based on a correlation between the legacy identifier of the data object and the destination identifier of the data object.

4. The computer implemented method of any preceding claim, wherein the data object is a first data object, and the method further comprises:
receiving a request to import a second data object from the database;
accessing the database to retrieve the second data object;
determining that the second data object is absent from the data table;
assigning an identifier to the second data object; and
importing the second data object and the identifier to the destination system.

5. The computer implemented method of any preceding claim, wherein:
the generating the data table includes:
determining correlations between the destination identifiers and the legacy identifiers; and
the data table is generated based on the correlations.

6. The computer implemented method of any preceding claim, wherein:
the generating the data table includes converting the legacy identifiers and the destination identifiers to Comma Separated Values; and
the data table is generated based on the Comma Separated Values.

7. The computer implemented method of any preceding claim, wherein:
the legacy identifiers are of a first identifier format,
the ingesting the data object at the data import system includes converting the first identifier format to a second identifier format, and the second identifier format corresponds to the data import system.

8. A computer program comprising machine-readable instructions which, when executed by competing apparatus, cause it to perform the method of any preceding claim.

9. A system comprising:
one or more processors of a machine; and
a memory storing instructions that, when executed by at least one processor among the one or more processors, causes the machine to perform operations comprising:
accessing a database that includes legacy identifiers and destination identifiers assigned to data objects, the legacy identifiers being received from a data source, the destination identifiers being assigned to the data objects at a destination system;
extracting the legacy identifiers and the destination identifiers;
generating a data table based on the legacy identifiers and the destination identifiers;
loading the data table to a data import system, the data import system residing between the data source and the destination system;
receiving a request to import data from the database to the destination system;
ingesting a data object at the data import system in response to the request;
differencing the data object with a previous version of the data object to identify a change to the data object, the previous version of the data object located at the destination system; and
storing the change to the data object at the destination system.

10. The system of claim 9, wherein the database further includes properties linked to the data object based on the legacy identifier, the properties accessible by a legacy import system based on the legacy identifier, and the instructions cause the system to perform operations further comprising:
receiving a request to import the properties to the destination system;
accessing the legacy import system based on the request;
retrieving the properties based on the legacy identifier;
importing the properties to the destination system; and
linking the properties to the destination identifier at the destination system.

11. The system of claim 9 or claim 10, wherein the differencing the data object includes:
comparing the data object to the data table;
identifying an identifier of the data object within the data table; and
accessing the destination system to retrieve a previous version of the data object based on a correlation between the legacy identifier of the data object and the destination identifier of the data object.

12. The system of any of claims 9 to 11, wherein the data object is a first data object, and the instructions cause the system to perform operations further comprising:
receiving a request to import a second data object from the database;
accessing the database to retrieve the second data object;
determining that the second data object is absent from the data table;
assigning an identifier to the second data object; and
importing the second data object and the identifier to the destination system.

13. The system of any of claims 9 to 12, wherein the generating the data table includes:
determining correlations between the destination identifiers and the legacy identifiers; and
wherein the data table is generated based on the correlations.

14. The system of any of claims 9 to 13, wherein the generating the data table includes:
converting the legacy identifiers and the destination identifiers to Comma Separated Values; and
wherein the data table is generated based on the Comma Separated Values.
